(19) Europäisches Patentamt
European Patent Office
Office européen des brevets

(11) Veröffentlichungsnummer: **0 014 843**
**A2**

(12) EUROPÄISCHE PATENTANMELDUNG

(21) Anmeldenummer: 80100261.9

(22) Anmeldetag: 21.01.80

(51) Int. Cl.³: C 08 J 7/12
C 08 J 7/04, C 07 C 149/00

(30) Priorität: 26.01.79 DE 2902959

(43) Veröffentlichungstag der Anmeldung: 03.09.80 Patentblatt 80/18

(84) Benannte Vertragsstaaten: AT BE CH DE FR GB IT LU NL SE

(71) Anmelder: Battelle-Institut e.V.
Am Römerhof 35
D-6000 Frankfurt/Main 90(DE)

(72) Erfinder: Roland, Reiner, Dr.
Cehspitz 11
D-6236 Eschborn(DE)

(72) Erfinder: Hildulf, Kaiser
Kurmainzer Strasse 32
D-6370 Oberursel(DE)

(74) Vertreter: Blum, Klaus-Dieter, Dipl.-Ing.
Am Römerhof 35
D-6000 Frankfurt/Main 90(DE)

(54) **Verfahren und Verbindungen zur Oberflächenmodifikation von Kunststoffen.**

(57) Zur Oberflächenmodifikation von natürlichen oder synthetischen makromolekularen Substraten werden organische Verbindungen verwendet, die einerseits hydrophile, hydrophobe, oleophobe, ionische und/oder vernetzbare Gruppen, andererseits zu Nitren oder Carben überführbare Gruppen, z.B. Azid- oder Diazogruppen aufweisen. Diese Verbindungen werden als Mono- oder Oligolayer aus der Lösung auf die zu modifizierende Oberfläche gebracht und anschließend photochemisch aktiviert. Dabei sind solche Bedingungen vorteilhaft, welche eine Orientierung des Moleküls mit der Azid- bzw. Diazogruppe zur Substratoberfläche hin bewirken. Die weiteren vernetzbaren Gruppen können zur Querbenetzung der aufgebrachten Schichten dienen.

EP 0 014 843 A2

Croydon Printing Company Ltd.

390-10/49/78/CASCH/KRI 3. Januar 1980

BATTELLE - INSTITUT E.V., Frankfurt/M

=========================================

Verfahren und Verbindungen zur Oberflächenmodifikation von makromolekularen Substanzen

=========================================

Die Erfindung betrifft ein Verfahren zur kovalenten Oberflächenmodifikation von makromolekularen Substanzen, insbesondere zum Zwecke der Hydrophilierung von Oberflächen aus natürlichen oder synthetischen makromolekularen Substraten sowie zur Verleihung ionischer Eigenschaften. Dadurch können z.B. bei Kunststoffen eine verbesserte Bedruckbarkeit, Überstreichbarkeit und Verklebbarkeit erzielt werden. Die Erfindung bezieht sich ferner auf neue Azid- beziehungsweise Diazo-Verbindungen, die eine Oberflächenmodifikation ermöglichen und auf ein Verfahren zur Herstellung derselben.

Es ist bekannt, daß die Eigenschaften von Polymeroberflächen modifiziert werden können, indem man die Basispolymere mit hydrophilen, hydrophoben oder ionischen Monomeren pfropft oder lösliche Polymere, z.B. Polyacrylsäure, nachträglich auf die Polymeroberflächen aufbringt und vernetzt. Die Oberflächeneigenschaften können auch durch chemische Reaktionen an der Polymeroberfläche, z.B. durch Chlorsulfonierung, Oxidation oder dergleichen, stark verändert werden. Ferner können niedermolekulare Verbindungen durch Plasmaeinwirkung oder strahleninduzierte Polymerisation an die Oberfläche gebunden werden.

Diese Verfahren haben jedoch den Nachteil, daß sie jeweils spezifisch für ein Basismaterial einsetzbar sind und nur in modifizierter Form auf andere Materialien übertragen werden können. Dies erschwert die Anwendung auf Formteile, die aus mehreren Basispolymerisaten bestehen. Hinzu kommen die unbefriedigenden Ergebnisse, insbesondere bei hydrophoben Polyolefinen, wie Polyäthylen und Polypropylen, sowie hohe Verfahrenskosten, lange Reaktionszeiten und das Erfordernis von Nachbehandlungen. Ferner wird das Basismaterial in vielen Fällen teilweise chemisch abgebaut, so daß im Extremfall sogar Bruchstücke leicht aus dem Formteil herausgelöst werden können. Die meisten Verfahren werden daher im industriellen Maßstab lediglich zur Behandlung von Folien herangezogen.

BAD ORIGINAL

Der vorliegenden Erfindung liegt die Aufgabe zugrunde, die vorgenannten Nachteile zu überwinden und ein wirksames Verfahren zur Modifikation von Oberflächeneigenschaften zu entwickeln, das sich sowohl zur Behandlung von Folien als auch für andere Formen eignet. Insbesondere sollen neue reaktionsfähige Verbindungen geschaffen werden, die eine starke Haftung zum polymeren Substrat besitzen und durch einfache und wirtschaftliche Maßnahmen eine Oberflächenmodifikation im Hinblick auf die Hydrophilierung und Verleihung ionischer Eigenschaften oder eine Hydrophobierung/Oleophobierung ermöglichen.

Es hat sich gezeigt, daß sich diese Aufgabe in technisch fortschrittlicher Weise lösen läßt, wenn eine organische monomere oder polymere Verbindung mit mindestens einer Azid- oder Diazogruppe sowie mit mindestens einer hydrophilen, hydrophoben, oleophoben, ionischen und/oder vernetzbaren Gruppe aus der Lösung auf die zu modifizierende Oberfläche aufgebracht und anschließend zur Umwandlung der Azid- oder Diazogruppe in die Nitren- oder Carbengruppe photochemisch aktiviert wird. Die Azid- beziehungsweise Diazogruppe wird durch kurzzeitige Bestrahlung in Nitren beziehungsweise Carben überführt. Diese entstehenden hochaktiven Stoffe stabilisieren sich durch Insertions- und Additionsreaktionen mit beinahe allen makromolekularen Oberflächen.

Zur Modifikation können monomere oder polymere Verbindungen bis zu einem Molekulargewicht von 50.000 g/mol herangezogen werden. Solche Verbindungen können außer den genannten funktionellen Gruppen vernetzbare Gruppen, wie Oxiran-(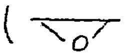), Aziridin- (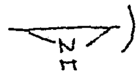) oder Vinyläthergruppen ($CH_2$=CH-O-) aufweisen. Die Azid- beziehungsweise Diazogruppe kann sich auch an einer Seitenkette des Moleküls befinden, die zur Oberfläche affin ist. Die polymeren Verbindungen besitzen vorzugsweise pro 150 bis 1000 g ein Mol Azid- oder Diazogruppe und pro 150 bis 5000 g ein Mol hydrophile, hydrophobe, oleophobe, ionische und/oder vernetzbare Gruppe. Solche Verbindungen werden aus der Lösung in an sich bekannter Weise durch Aufsprühen, Aufrakeln usw. als Oligolayer auf die zu modifizierende Oberfläche gebracht. Wäßrige, wäßrig/organische oder organische Lösungsmittel werden hierzu verwendet.

Es sind auch Lösungsmittel geeignet, welche die zu modifizierende Oberfläche gut benetzen, z.B. lineare Alkane, Petrolether bei Polyolefinen und aliphatische Alkohole bei aromatischen Polyestern. Die vernetzbaren Gruppen führen dabei durch Anwendung geeigneter Katalysatoren zu einer weiteren Stabilisierung der Schicht.

Die aufzubringende organische Verbindung besitzt vorzugsweise selber einen Netzmittelcharakter. Dies ist z.B. der Fall bei Verbindungen, die eine hydrophobe, lineare Kette mit 8 bis 20,

BAD ORIGINAL

vorzugsweise 10 bis 16 C-Atomen aufweisen, wobei an einem Ende des Moleküls die Azid- oder Diazogruppe und am entgegengesetzten Ende mindestens eine hydrophile Gruppe vorhanden sind. Solche Verbindungen eignen sich zur Hydrophilierung von hydrophoben Kunststoffoberflächen und werden vorzugsweise aus der Lösung durch Spreiten als Monolayer aufgebracht.

Die bevorzugten neuen Verbindungen zur Hydrophilierung hydrophober Oberflächen besitzen die allgemeine Formel

$$A - X-(CH_2)_m - Y - (CH_2)_n - B$$

in der A eine $N_3$- oder eine $N_2CH$-Gruppe ist,

X für eine $-CH_2$-, Phenyl- oder eine CO-Gruppe steht,

m eine ganze Zahl von 0 bis 6 ist,

Y ein Schwefelatom oder eine $CH_2$-Gruppe bedeutet,

n eine ganze Zahl von 8 bis 26 ist,

B für einen oder zwei COOH-, $COOR_1$-, $CH_2OR_1$-, $CH_2OH$-, $CONH_2$-, $CONHR_2$-, $SO_2OH$-Reste steht, wobei

$R_1$ Hydroxyalkyl-, Hydroxyalkoxyalkyl-Gruppen mit 1 bis 6

C-Atomen oder ein einwertiges Kation, z.B. Na, K, und $R_2$ Alkyl-, Hydroxyalkyl-, Hydroxyalkoxyalkyl-Gruppen mit 1 bis 6 C-Atomen bedeuten.

Besonders geeignet sind Verbindungen der Formel

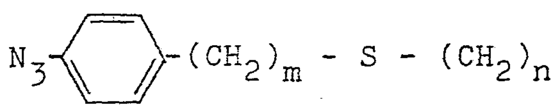

und

$$N_3 - \overset{O}{\overset{\|}{C}} - (CH_2)_m - Y - (CH_2)_n - COOH$$

in denen n, m und Y die obigen Bedeutungen besitzen.

Diese Verbindungen lassen sich nach bekannten Verfahren herstellen. Die erfindungsgemäßen Thioäther, d.h. Verbindungen, in denen Y für ein Schwefelatom steht, können synthetisiert werden, indem man eine Verbindung der Formel

$$A' - X - (CH_2)_m - SH$$

in der X und m die obige Bedeutung besitzen und A' eine in Acid- beziehungsweise Diazogruppe leicht überführbare Gruppe, z.B. eine $NH_2$-Gruppe, ist, mit einer Verbindung der Formel

$$Hal - (CH_2)_n - B$$

BAD ORIGINAL

in der Hal Cl, F oder Br bedeutet und n und B die obigen Bedeutungen besitzen, umsetzt und eine Verbindung der Formel

$$A' - X - (CH_2)_m - S - (CH_2)_n - B$$

erhält und anschließend die A'-Gruppe in an sich bekannter Weise in eine Azid- beziehungsweise Diazogruppe umwandelt.

Analog lassen sich auch Verbindungen der Formel

$$A - X - (CH_2)_m - Y - (CR_3)_n - R_3$$

herstellen, in der A, X, Y, m und n die obige Bedeutung besitzen und $R_3$ für ein H- oder F-Atom steht, wobei mindestens ein H-Atom der $-(CH_2)_m-$ oder ein $R_3$-Rest der $-(CR_3)_n$-Gruppierung durch eine Oxiran-, Aziridin- oder Vinyläthergruppe substiuiert ist.

Diese Verbindungen lassen sich aus wäßriger oder wäßrig/organischer Lösung in Form von Mono- oder Oligoschichten auf die Substratoberflächen aufziehen. Die pro $m^2$ benötigte Menge an oberflächenaktiver Substanz liegt normalerweise bei ca. $10^{-4}$ bis $10^{-2}$ g.

Bei Verwendung oberflächenaktiver Substanzen mit ω-ständiger Azid- beziehungsweise Diazogruppe ist die kovalente Bindung

zwischen dem Basispolymerisat und der oberflächenaktiven Substanz maximal gesichert. Auch eine dünne Schicht der Oberflächensubstanz ermöglicht eine starke Haftung zum Basispolymerisat, wobei teilweise Vernetzung mit diesem und teilweise Vernetzung der Substanzmoleküle untereinander eintritt.

Die nachfolgenden Beispiele erläutern die Erfindung.

Beispiel 1

10 Teile 4-Acetamidothiophenol werden mit 10 Teilen ω-Halogenundecansäure unter Zusatz von 25 Teilen Base in wäßrig/organischer Lösung umgesetzt. Nach dem Entfernen der Schutzgruppe mit 0,1 n KOH in der Siedehitze während 4 Stunden werden 10 Teile des substituierten Anilins mit 10 Teilen Natriumnitrit diazotiert. In die Diazoniumsalzlösung werden 15 Teile Natriumazid gegeben, aus der sich nach 10- bis 15-stündigem Rühren das Produkt als farbloser Feststoff in 60 %-iger Ausbeute abscheidet (Fp: 73 - 75° C).

Beispiel 2

10 Teile 2-(4-Nitrophenyl)-1-Chloräthan werden mit 10 Teilen Thioharnstoff in wäßrigem Äthanol umgesetzt. Das anfallende Salz wird mit 20 Teilen Base zum Mercaptid hydrolisiert. Durch Ansäuern wird das Mercaptan freigesetzt, extrahiert und destilliert. Die Umsetzung mit 10 Teilen ω-Halogencarbonsäure

BAD ORIGINAL

liefert nach dem in Beispiel 1 beschriebenen Verfahren die verlängerte para-Nitrophenylsubstituierte Carbonsäure. Die Reduktion der Nitrogruppe wird in wäßriger Essigsäure mit Zink und Salzsäure durchgeführt. Die Diazotierung und Herstellung des Azids erfolgen nach dem im Beispiel 1 beschriebenen Verfahren.

Beispiel 3

10 Teile 4-Acetamidothiophenol werden mit 10 Teilen ω-Halogenalkylalkohol unter Zusatz von 15 Teilen Base in wäßrig/organischer Lösung umgesetzt. Die Abspaltung der Schutzgruppe, Diazotierung und Herstellung des Azids erfolgen nach dem Verfahren des Beispiels 1.

Beispiel 4

Das Verfahren des Beispiels 1 wird wiederholt, wobei jedoch diesmal anstelle von ω-Halogenundecansäure ω-Halogendodecansäure eingesetzt wird. Die Ausbeute beträgt 46 % (Fp: 85-86 °C).

Beispiel 5

Das Verfahren des Beispiels 1 wird wiederholt, wobei jedoch diesmal anstelle von ω-Halogenundecansäure 1-Chlor[illegible]decan eingesetzt wird. Die Ausbeute an Azid beträgt [illegible] %.

Beispiel 6

In einem niedrigsiedenden polaren Lösungsmittel, wie z.B. Chlor[illegible] [illegible]

Azidophenylthioäthercarbonsäuren gelöst und durch Sprühen in einer dünnen Schicht auf die Polymeroberflächen aufgebracht. Diese behandelte Oberfläche wird einer mit Wasserdampf gesättigten Atmosphäre ausgesetzt, anschließend im Vakuum getrocknet und danach mit einer UV-Lampe bestrahlt.

Beispiel 7

Die Azidophenylthioätheralkylcarbonsäure wird aus einer verdünnten Chloroformlösung auf Wasser, das Salzzusatz enthält, in einen Langmuirtrog gebracht und gespreitet. Durch stufenweise Druckerhöhung wird eine Orientierung der oberflächenaktiven Substanzen bewirkt. Durch diese monomolekulare Schicht der aufgebrachten Substanz wird die Polymerfolie getaucht und wieder herausgezogen. Auf der Polymeroberfläche befinden sich die oberflächenaktiven Substanzen als monomolekulare Schicht. Durch Bestrahlen mit einer UV-Lampe wird die Azidogruppe zu Nitren aktiviert, das dann chemisch mit der Oberfläche reagiert.

Beispiel 8

Auf die nach Beispiel 7 im Langmuirtrog hergestellte, orientierte monomolekulare Schicht wird das polymere Substrat vorsichtig aufgelegt und von oben mit einer UV-Lampe bestrahlt. Dabei findet die chemische Aktivierung und die Reaktion mit der Oberfläche statt.

390-10/49/78/CASCH/KRI 3. Januar 1980

BATTELLE - INSTITUT E.V., Frankfurt/M

## Patentansprüche

1. Verfahren zur kovalenten Oberflächenmodifikation von makromolekularen Substanzen, dadurch gekennzeichnet, daß eine organische monomere oder polymere Verbindung mit mindestens einer Azid- oder Diazogruppe sowie mit mindestens einer hydrophilen, hydrophoben, oleophoben, ionischen und/oder vernetzbaren Gruppe aus der Lösung auf die zu modifizierende Oberfläche gebracht und anschließend zur Umwandlung der Azid- oder Diazogruppe in die Nitren- oder Carbengruppe photochemisch aktiviert wird.

2. Verfahren nach Anspruch 1, dadurch gekennzeichnet, daß eine monomere Verbindung mit einer hydrophoben linearen Kette mit 8 bis 26, vorzugsweise 10 bis 16 C-Atomen

BAD ORIGINAL

verwendet wird, wobei an einem Ende des Moleküls die Azid- oder Diazogruppe und am entgegengesetzten Ende mindestens eine hydrophile Gruppe vorhanden sind.

3. Verfahren nach Anspruch 1 oder 2, dadurch gekennzeichnet, daß eine Verbindung der Formel

$$A - X - (CH_2)_m - Y - (CH_2)_n - B$$

in der A eine $N_3$- oder eine $N_2CH$-Gruppe ist,

X für eine $-CH_2-$, eine Phenyl- oder eine CO-Gruppe steht,

m eine ganze Zahl von 0 bis 6 ist,

Y ein Schwefelatom oder eine $-CH_2$-Gruppe bedeutet,

n eine ganze Zahl von 8 bis 26 ist,

B für einen oder zwei COOH-, $COOR_1$-, $CH_2OH$-, $CONH_2$-, $CONHR_2$-, $SO_2OH$-Rest steht, wobei $R_1$ Hydroxyalkyl-, Hydroxyalkoxyalkyl-Gruppen mit 1 bis 6 C-Atomen oder ein einwertiges Kation, z.B. Na, K, und $R_2$ Alkyl-, Hydroxyalkyl-, Hydroxyalkoxyalkyl-Gruppen mit 1 bis 6 C-Atomen bedeuten,

vorzugsweise eine Verbindung mit der Formel

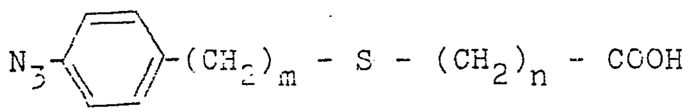

oder eine Verbindung der Formel

$$N_3 - \overset{O}{\overset{\|}{C}} - (CH_2)_m - Y - (CH_2)_n - COOH$$

in der n, m und Y die obigen Bedeutungen besitzen, verwendet wird.

4. Verfahren nach Anspruch 1, dadurch gekennzeichnet, daß eine Verbindung mit einem Molekulargewicht von bis zu 50.000 g/Mol verwendet wird, die pro 150 bis 1000 g ein Mol Azid- oder Diazogruppe und pro 150 bis 5000 g ein Mol hydrophile, ionische und/oder vernetzbare Gruppe aufweist.

5. Verfahren nach Anspruch 4, dadurch gekennzeichnet, daß als vernetzbare Gruppen Oxiran-, Aziridin- oder Vinyläthergruppen vorgesehen sind.

6. Verfahren nach Anspruch 4 oder 5, dadurch gekennzeichnet, daß eine Verbindung der Formel

$$A - X - (CH_2)_m - Y - (CF_2)_n - F$$

BAD ORIGINAL

in der A, X, Y, m und n die obige Bedeutung besitzen, verwendet wird, wobei mindestens ein H-Atom der $-(CH_2)_m-$ oder ein F-Atom der $-(CF_2)_n-$Gruppierung durch eine vernetzbare Gruppe, vorzugsweise eine Oxiran-, Aziridin- oder Vinyläthergruppe substituiert ist.

7. Verbindungen der Formel

$$A - X - (CH_2)_m - S - Z$$

in der A eine $N_3$- oder $N_2CH$-Gruppe ist,

X für eine Phenyl- oder CO-Gruppe steht,

m eine ganze Zahl von 0 bis 6 ist,

Z eine Gruppe $-(CH_2)_n-B$, wobei

B für einen oder zwei COOH, $COOR_1$-, $CH_2OR_1$-, $CH_2OH$-, $CONH_2$-, $CONHR_2$-, $SO_2OH$-Rest steht, wobei

$R_1$ Hydroxyalkyl-, Hydroxyalkoxyalkyl-Gruppen mit 1 bis 6 C-Atomen oder ein einwertiges Kation, z.B. Na, K und

$R_2$ Alkyl-, Hydroxyalkyl-, Hydroxyalkoxyalkyl-Gruppen mit 1 bis 6 C-Atomen bedeuten oder

eine Gruppe $-(CR_3)_n-R_3$ ist, in der $R_3$ für ein H- oder F-Atom steht und

n eine ganze Zahl von 8 bis 26 ist, wobei

wenn Z eine $-(CH_2)_n-R_3$-Gruppe ist, mindestens ein H-Atom der $-(CH_2)_m$-Gruppierung durch ein Oxiran-, Aziridin- oder Vinyläthergruppe substituiert ist.

8. Verfahren zur Herstellung von Verbindungen nach Anspruch 7, dadurch gekennzeichnet, daß man eine Verbindung der Formel

$$A' - X - (CH_2)_m - SH$$

in der X und m die obige Bedeutung besitzen und A' eine in Azid- beziehungsweise Diazogruppe leicht überführbare Gruppe, z.B. eine $NH_2$-Gruppe, ist, mit einer alkylierenden Verbindung der Formel

$$Hal-Z \text{ oder } Z-O-Tosyl \text{ oder } CH_2 = CH - SO_2 - Z,$$

$$CH_2 = CH - Z, \quad CH_2 = \underset{\substack{| \\ C \equiv N}}{C} - Z$$

in der Hal Cl, F oder Br bedeutet und Z die obige Bedeutung besitzt, umsetzt und eine Verbindung der Formel

$$A' - X - (CH_2)_m - S - Z$$

erhält und anschließend die A'-Gruppe in an sich bekannter Weise in eine Azid- beziehungsweise Diazogruppe umwandelt.

BAD ORIGINAL